# EUROPEAN PATENT APPLICATION

(11) **EP 0 949 575 A1**
(43) Date of publication of application: **13.10.1999**
(21) Application number: 98944287.6
(22) Date of filing: 29.09.1998
(51) Int. Cl.: G06F 19/00, G06F 17/60

(54) **ORDER DATA MANAGEMENT SYSTEM**

(30) Priority: 30.09.1997 JP 26715997; 28.08.1998 JP 24366898
(71) Applicant: Kabushiki Kaisha TEC, Tagata-gun, Shizuoka-ken 410-2392 (JP)
(72) Inventor: SANO, Kouichi, Shizuoka-ken 421-3104 (JP)
(74) Representative: Fuchs Mehler Weiss & Fritzsche
(86) International application number: JP9804361
(87) International publication number: WO9917243

(57) **Abstract**

An order data management system characterized in that an inquiry means, when a "last table number inquiry" is selected, transmits the order information, entrance time, and exit time of the previous customer before the customer of the inputted table number from a system controller to a radio portable terminal through a communication controller and a radio base station and displays them on the display section of the terminal.

## Description

### Technical Field

The present invention relates to an order data management System for inputting customer's order information with use of a radio portable terminal, thereby entering an order, notifying a worker and managing sales information by means of a POS (Point of Sales) terminal, and more particularly to an order data management system for use in restaurants, etc.

### Background Art

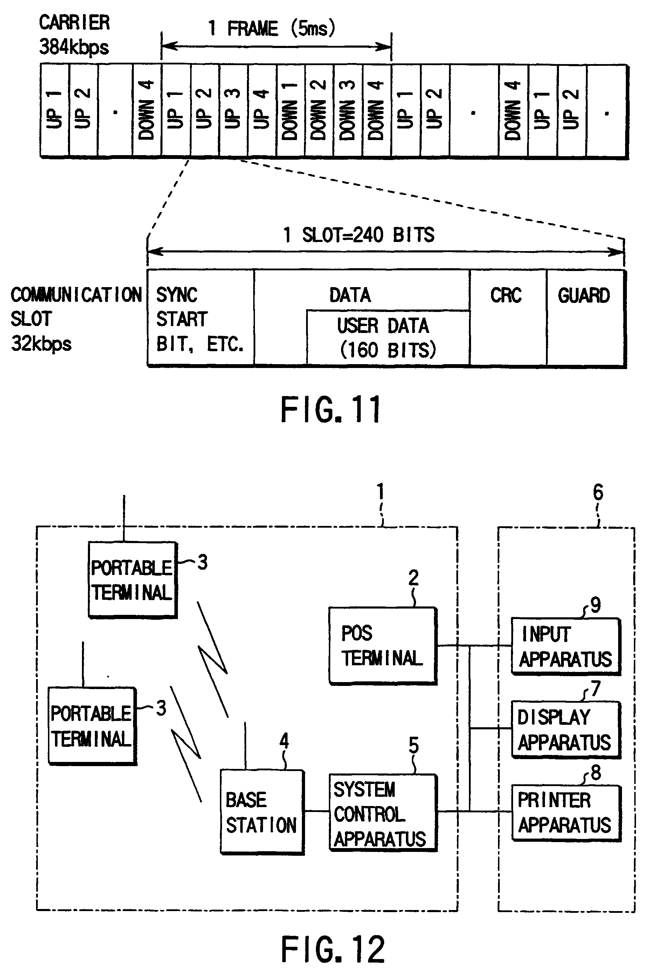

A conventional order data management system, as shown in FIG. 12, has a restaurant section 1 which is provided with a POS terminal 2 for managing and storing sales information, radio portable terminals 3 through which a server enters a customer's order for radio communication, a radio base station 4 for radio communication with the radio portable terminal 3, and a system control apparatus 5 for controlling the radio base station 4 and communicates with the POS terminal. The order data management system also has a kitchen 6 which is provided with a display apparatus 7 for displaying an order content, a printer apparatus 8 for printing out the order content, and an input apparatus 9 for inputting finish information on the order. If the server carrying the radio portable terminal 3 enters the order information of the customer, the order information is delivered to the system control apparatus 5 from the radio portable terminal 3 via the radio base station 4. The system control apparatus 5 transmits the received order information to the display apparatus 7 and printer apparatus 8 in the kitchen 6 and notifies the POS terminal 2. In the kitchen 6, cooking is performed while the customer's order information is understood by the display or printing. If the cooking is finished, the server is informed of this by the inputting of finish information from the input apparatus 9. The server serves the cooked food to the table of the customer. If the customer finishes the meal, he/she comes to the POS terminal near the entrance/exit of the restaurant section 1 for payment settlement and goes out. A series of these steps are performed in this system

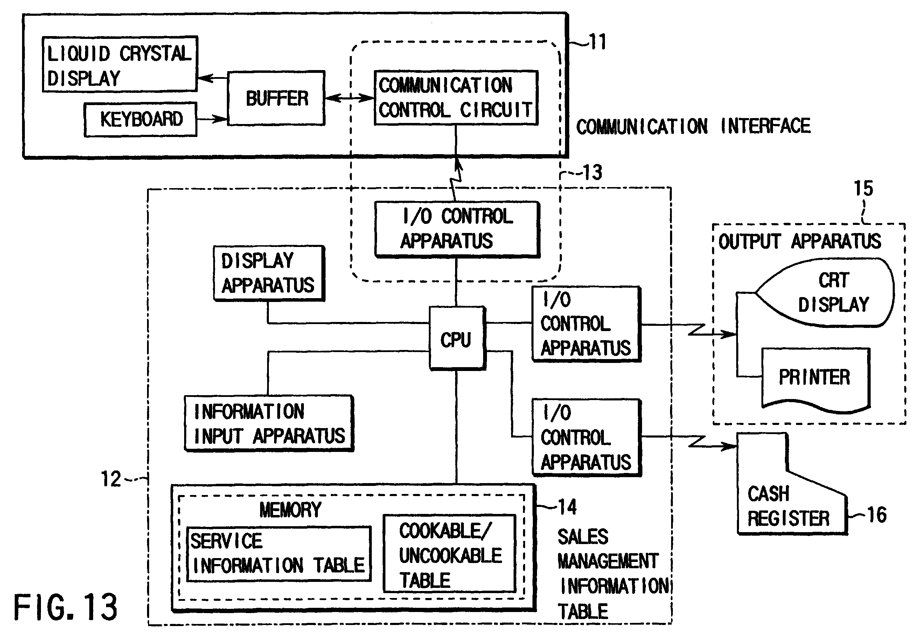

In the invention described Jpn. Pat. Appln. KOKAI Publication No. 63-211063, as shown in FIG. 13, a terminal apparatus 11 carried by a server is provided with an input function and a display function. The terminal apparatus 11 and a processing apparatus 12 are bidirectionally connected via a communication interface 13, for example, by means of radio communication, so that the speed of data transmission between the terminal apparatus 11 and processing apparatus 12 is increased. In addition, the processing apparatus 12 is provided with a sales management information table 14 so that the server may quickly obtain sales management information, where necessary. The processing apparatus 12 outputs order information to an output apparatus 15 provided in the kitchen for the purpose of notification. Moreover, the processing apparatus 12 transmits order information, etc. to a cash register 16 in preparation for settlement of payment by the customer.

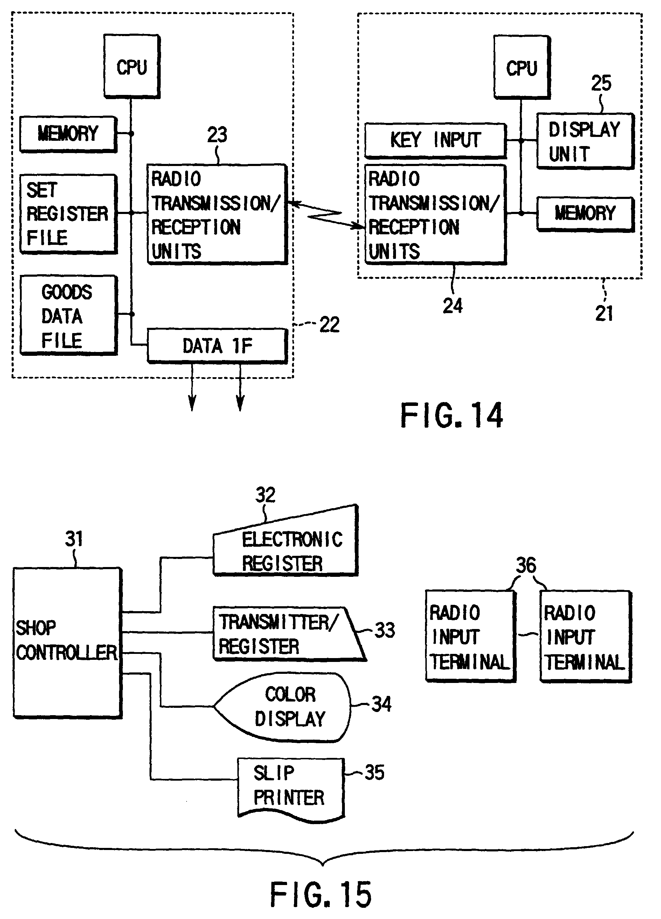

In the invention described Jpn. Pat. Appln. KOKAI Publication No. 1-306963, as shown in FIG. 14, a radio portable terminal 21 and a controller 22 are provided with radio transmission/reception units 24 and 23, respectively. Bidirectional radio transmission is performed between the radio portable terminal 21 and controller 22 so that out-of-stock information or additional information may be displayed on a display 25 of the radio portable terminal 21.

In the invention described Jpn. Pat. Appln. KOKAI Publication No. 3-110669, as shown in FIG. 15, a shop controller 31 is connected to an electronic register 32, a transmission/reception unit 33, a color display 34 and a slip printer 35. In addition, portable radio terminals 36 are provided. Since the radio terminals 36 can perform bidirectional communication, the server can understand the current state of cooking, the finished food of menu, etc. on the terminal 36 without going to the kitchen. In addition, the server can inquire about service information such as the current state of cooking, finished food, out-of-stock information or the number of knives and forks, or after-meal menu information, on the terminal 36.

In the above prior art, however, the radio communication between the radio base station and the radio portable terminal is performed by, e.g. half-duplex radio transmission with a transmission speed of about 4,800 bps which conforms to "400 MHz Band Data Transmission (ARIB Standard RCR STD-17A) Radio Equipment for Specific Low Power Radio Station" of the Association of Radio Industries and Businesses (ARIB). As a result, the transmission speed is low and a great deal of time is required for transmission/reception of a large amount of data.

Since the transmission speed is low, the use of an information inquiry function of the radio portable terminal, if it is provided, is limited to information with a small amount of data. Moreover, since the half-duplex radio transmission is employed, the transmission of an order from the radio portable terminal to the radio base station and the transmission of information of the inquiry function from the radio base station to the radio portable terminal cannot be performed at the same time. As a result, a longer processing time is required for radio transmission. Furthermore, the radio base station cannot radio-communicate with a plurality of radio portable terminals at the same time.

Besides, since the transmission/reception data of the radio portable terminal is limited to order information and inquiry information, communication among servers, for example, for calls is conducted by broadcasting or speaking. This will degrade the atmosphere within the shop.

### Disclosure of Invention

The present invention has been made in consideration of the above points, and its object is to provide an order data management system wherein a radio portable terminal can receive a great deal of various inquiry information quickly in a short time, such as available table information, while radio-transmitting order information at the same time, and can also quickly cope with a change of menu information, and, for example, servers can mutually communicate with use of the radio portable terminals within the shop and can quickly work without degrading the atmosphere within the shop.

According to an aspect of the invention, there is provided an order data management system comprising:
a POS terminal for storing sales information in a storage section and managing the sales information;
a system control apparatus, provided within the POS terminal or as a separate body, for storing information such as sales information or menu information;
order information notification means for notifying a worker of order information;
one or more radio portable terminals for inputting the order information and radio-transmitting the order information;
one or more radio base stations for radio-communicating with the radio portable terminal with use of full-duplex radio links; and
a communication control apparatus connected to the POS terminal, the system control apparatus and the radio base station,
   wherein the radio portable terminal is provided with query means for radio-transmitting various information such as the sales information and menu information stored in the POS terminal or the system control apparatus and displaying the various information on a display unit of the radio portable terminal, and communication means for communication of voice, characters or images with another the radio portable terminal, the POS terminal or the system control apparatus.

According to an aspect of the invention, the full-duplex radio links are used between the radio portable terminal and radio base station. Thus, the radio portable terminal can quickly receive in a short time a great deal of various query information such as available table information at the same time as radio transmission of order information. In addition, for example, servers within the shop can communicate with one another with use of the radio portable terminal and can thus carry out works quickly without degrading the atmosphere within the shop.

### Brief Description of Drawings

FIG. 1 is a block diagram showing the structure of a whole system according to an embodiment of the invention.
FIG. 2 is a block diagram showing the structure of a radio portable terminal according to the embodiment.
FIG. 3 shows an external appearance of the radio portable terminal.
FIG. 4 is a block diagram showing the structure of a radio base station according to the embodiment.
FIG. 5 is a block diagram showing the structure of a communication control system according to the embodiment.
FIG. 6 is a block diagram showing the structure of a system control apparatus according to the embodiment.
FIG. 7 shows an example of display image on a display/input apparatus according to the embodiment.
FIGS. 8A to 8E show examples of the screen of the display of the radio portable terminal according to the embodiment.
FIG. 9 shows an example of display image of "all current remaining orders" displayed on the display.
FIGS. 10A and 10B are flow charts illustrating a series of operations of the order data management system according to the embodiment.
FIG. 11 is a view for describing a radio communication system according to the embodiment.
FIG. 12 is a block diagram showing prior art.
FIG. 13 is a block diagram showing another prior art.
FIG. 14 is a block diagram showing another prior art.
FIG. 15 is a block diagram showing another prior art.

### Best Mode of Carrying Out the Invention

An embodiment of the present invention will now be described with reference to the accompanying drawings. This embodiment adopts a radio system conforming to "Second-generation cordless Phone System Standard (RCR-STD28)" of the ARIB (English-version PERSONAL HANDY PHONE SYSTEM RCR STANDARD) and a transmission control procedure conforming to "PHS Internet Access Forum Standard (PIAFS) Specifications" of the PHS (Personal Handy-phone System) Internet Access Forum.

### (Constitution)

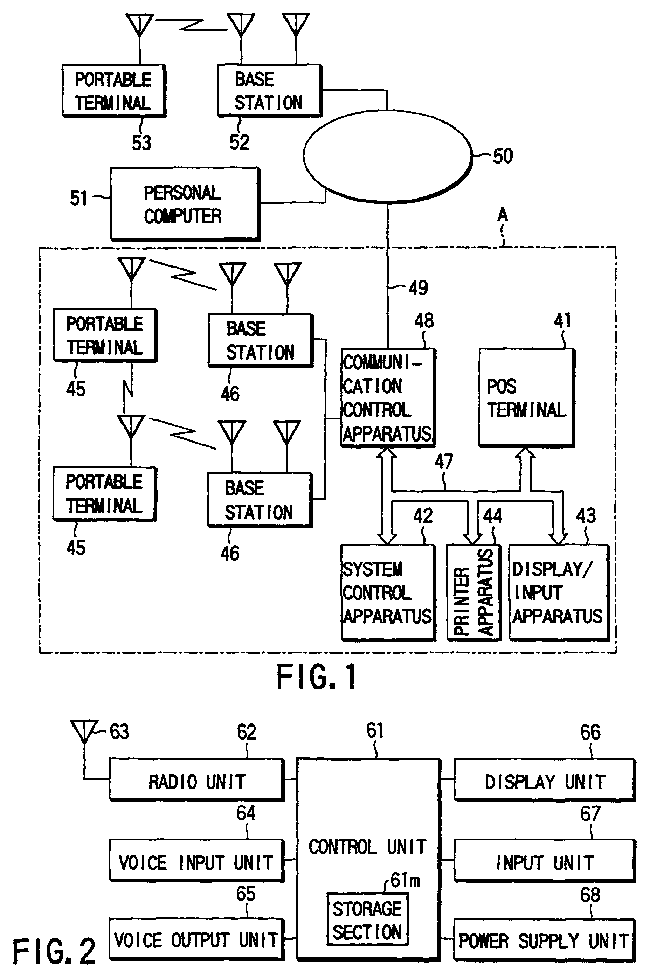

FIG. 1 is a block diagram showing the structure of a whole system. Within a restaurant shop A, there are provided: a POS (Point of Sales) terminal 41, disposed on a check-out counter or a payment calculation section, for storing sales information in a storage unit and managing the information; a system control apparatus 42, provided separately from the POS terminal 41, for storing information such as sales information, order information and menu information and controlling the entire system; a display/input apparatus 43 disposed in the kitchen, wherein a display apparatus for displaying order information and an input apparatus for performing input operations such as completion or deletion of order information are integrated; a printer apparatus 44, disposed in the kitchen, for printing out order information; a plurality of radio portable terminals 45 for inputting and radio-transmitting order information; a plurality of radio base stations 46 for radio-communicating with the radio portable terminals 45 with use of a full-duplex radio link; and a communication control apparatus 48 connected to the POS terminal 41, system control apparatus 42, display/input apparatus 43 and printer apparatus 44 over a LAN 47 and to the radio base stations 46.

The communication control apparatus 48 is connected to a public network/purpose-specific line 50, such as an ISDN (Integrated Services Digital Network), a PSTN (Public Switched Telephone Network) or a PHS network, over a communication line 49 such as an analog line, a digital line or a purpose-specific line. Thus, the communication control apparatus 48 can communicate with an outside personal computer 51 or a radio portable terminal 53 via a radio base station 52 of a PHS service provider, which is connected to the public network/purpose-specific line 50.

The system control apparatus 42 is a device similar to an ordinary personal computer and controls communication among devices. The printer apparatus 44 prints out information for preparation of ordered foods or bills to customers. The display/input apparatus 43 has display/input functions of a touch-panel system, and displays the current state of orders and performs input operations such as completion or deletion of orders. The display/input apparatus 43 and printer apparatus 44 constitute order information notification means for notifying workers of order information.

The POS terminal 41 manages and stores sales information and copes with payment processing for customers on the basis of the sales information. The communication control apparatus 48 controls the radio base stations 46 for communication with the radio portable terminals 45. The communication control apparatus 48 also controls communication with the system control apparatus 42, POS terminal 41, printer apparatus 44 and display/input apparatus 43 and communication with the device outside the shop via the communication line 49.

The radio portable terminal 45 is carried by a server. The radio portable terminal 45 has an order entry function for enabling the server to input a customer's order information and radio-transmit it to the radio base station 46; an inquiry function for sending a command to the system control apparatus 42 via the radio base station 46 and communication control apparatus 48 to inquire of all current order information, menu information or sales data; and a communication function for transmitting/receiving voice, images and messages with other radio portable terminal 45, system control apparatus 42 and POS terminal 41.

The radio portable terminal 53 having a contract with the PHS service provider is radio-connected to the radio base station 52 of the service provider and can execute the same inquiry function and communication function as the radio portable terminal 45 via the communication control apparatus 48. The personal computer 51 has communication means such as a modem. The personal computer 51 is connected to the public network/purpose-specific line 50 and can execute the same inquiry function and communication function as the radio portable terminal 45 via the communication control apparatus 48.

Although a single printer apparatus 44 is provided in the above embodiment, two printer apparatuses may be provided for servers and customers, respectively. The display/input apparatus 43 may be constituted by two separate devices, i.e. a display apparatus and an input apparatus. The system control apparatus 42 may be built in the POS terminal 41. Moreover, the printer apparatus 44 and display/input apparatus 43 may be connected directly to the system control apparatus 42, without using the LAN 47.

FIG. 2 is a block diagram showing the structure of the radio portable terminal 45, 53. The radio portable terminal 45, 53 comprises a control unit 61 for controlling the entirety of the terminal; a radio unit 62 conforming to RCR-STD28; an antenna 63 connected to the radio unit 62; a voice input unit 64 for inputting voice at the time of a call, etc.; a voice output unit 65 for outputting voice from the call destination; a liquid crystal type display unit 66; an input unit 67 of a pen type or a touch panel type; and a power supply unit 68 such as a battery. In addition, an infrared type communication unit for communication with the outside may be provided. The control unit 61 is provided with a storage section 61m. The storage section 61m stores menu information sent from the system control apparatus 42, as well as telephone numbers of the radio terminals possessed by the manager, server A and server B.

The control unit 61 has a radio communication protocol for radio communication of the radio portable terminal 45 within the shop, and a radio communication protocol for connection of the radio portable terminal 53 to the radio base station 52 of the PHS service provider. The same terminal can communication with the inside and outside of the shop.

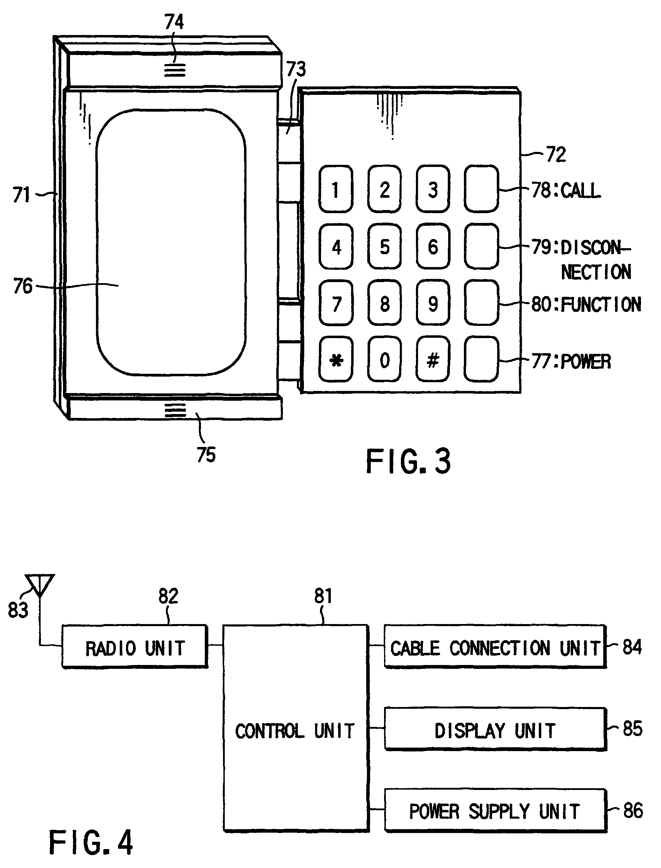

FIG. 3 shows an external appearance of the radio portable terminal 45.

The radio portable terminal 45 has an openable structure wherein a casing body 71 and a casing body 72 are coupled by means of a hinge 73. The casing body 71 is provided with a speaker 74 for a voice call, a microphone 75 and a touch panel display 76 wherein the display unit 66 and input unit 67 are integrated. The casing body 72 is provided with switches. The casing body 72 is provided with "0" to "9" keys, a "*" key and a "#" key, as well as a power key 77, a call key 78 for effecting connection in the case of reception of a voice call, a disconnection key 79 for disconnecting a voice call at the time of the end of the voice call, and a function key 80 for performing functions of volume control, etc.

As regards only the voice call reception in the communication function, connection is effected by depressing the call button 78 of the casing body 72 at the time of call reception. Disconnection is similarly effected at the time of the end of the voice call.

FIG. 4 is a block diagram showing the structure of the radio base station 46. The radio base station 46 comprises a control unit 81 for controlling the entirety of the base station; a radio unit 82 for radio communication with the radio portable terminal 45 within the shop; an antenna 83 connected to the radio unit 82; a cable connection unit 84 connected to the communication control apparatus 48 over a cable; a display unit 85 for displaying a communication state by means of an LED, etc.; and a power supply unit 86 constituted by a battery, an AC adapter, etc. The radio unit 82 conforms to RCR-STD28. The control unit 81 corresponds to the radio communication protocol for radio communication within the shop. The control unit 81 has an internal memory in which the radio portable terminal capable of radio communication is registered in advance.

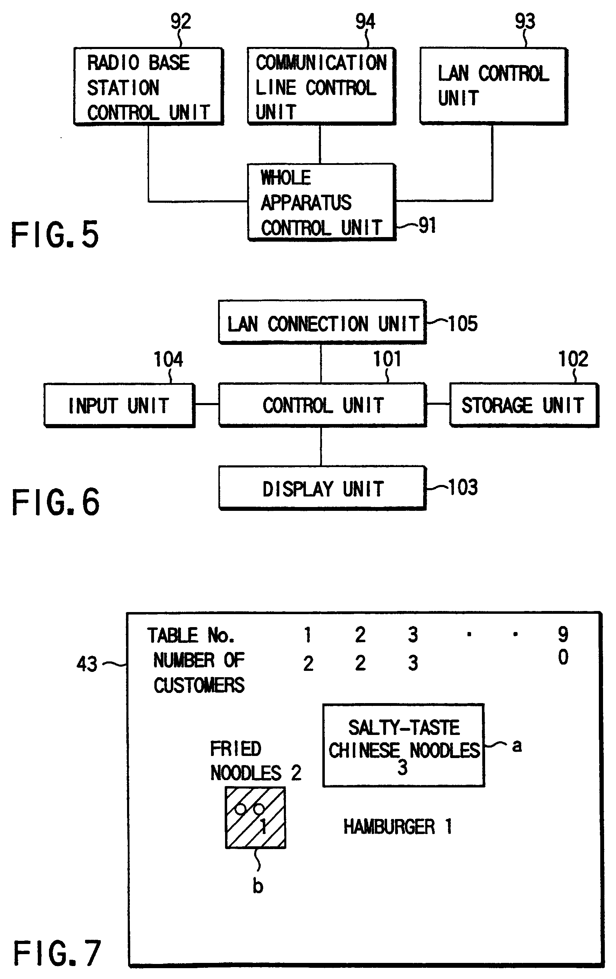

FIG. 5 is a block diagram showing the structure of the communication control apparatus 48. The communication control apparatus 48 comprises a whole apparatus control unit 91 for controlling the entirety of the apparatus; a radio base station control unit 92 for connection with the radio base station 46; a LAN control unit 93 for LAN connection with the POS terminal 41 and system control apparatus 42; and a communication line control unit 94 for connection with the communication line 49.

The radio base station control unit 92 has functions of controlling a plurality of radio base stations 46 and, when the radio portable terminal 45 is used for radio communication, selecting the radio base station 46 in a good communication state with high reception electric field intensity and thus effecting communication. The communication line control unit 94 has functions of separating three-channel time-division signals on a digital line, for example, when the digital line is used as communication line 49, and converting the signals to a data format processible by the whole apparatus control unit 91, as well as a reverse conversion function. The whole apparatus control unit 91 has an internal memory in which the radio portable terminal capable of radio communication with the radio base station is registered in advance.

FIG. 6 is a block diagram showing the structure of the system control apparatus 42. The system control apparatus 42 has basically the same hardware structure as a personal computer or a work station. The system control apparatus 42 comprises a control unit 101 including a CPU (central processing unit), a ROM (read-only memory), a RAM (random-access memory), etc.; a storage unit 102 for storing data, including a hard disk, a floppy disk, a memory card, etc.; a display unit 103 such as a CRT display; an input unit 104 such as a keyboard or a mouse; and a LAN connection unit 105 connected to the LAN 47. The storage unit 102 stores programs for carrying out basic operations, as well as part or all of information necessary for management of the shop, such as information on the radio portable terminal capable of radio communication, menu information, current order information, table information, sales information and information on servers. These information items are always updated.

FIG. 7 shows an example of display image on the display/input apparatus 43. The first line indicates a table number, the second line indicates the number of customers, and the third and following lines indicate the content of order. When the number of customers is zero, it is indicated that the table is available. When the number of customers is one or more, the presence of customer is indicated. If an order is sent by the radio portable terminal 45, the content of order is displayed by characters at the third and following lines. If the ordered food is completed in the kitchen, the characters indicating the order are surrounded by frame a. If the food is served, the characters are in turn displayed in white letters b. If the payment by the customer is finished at the POS terminal 41, the number of customers is set at zero and the content of order is deleted.

### (Operation)

A description will now be given of a series of operations of the order data management system in a case where menu information is stored in the system control apparatus 42 and no menu information is set in the radio portable terminal 45.

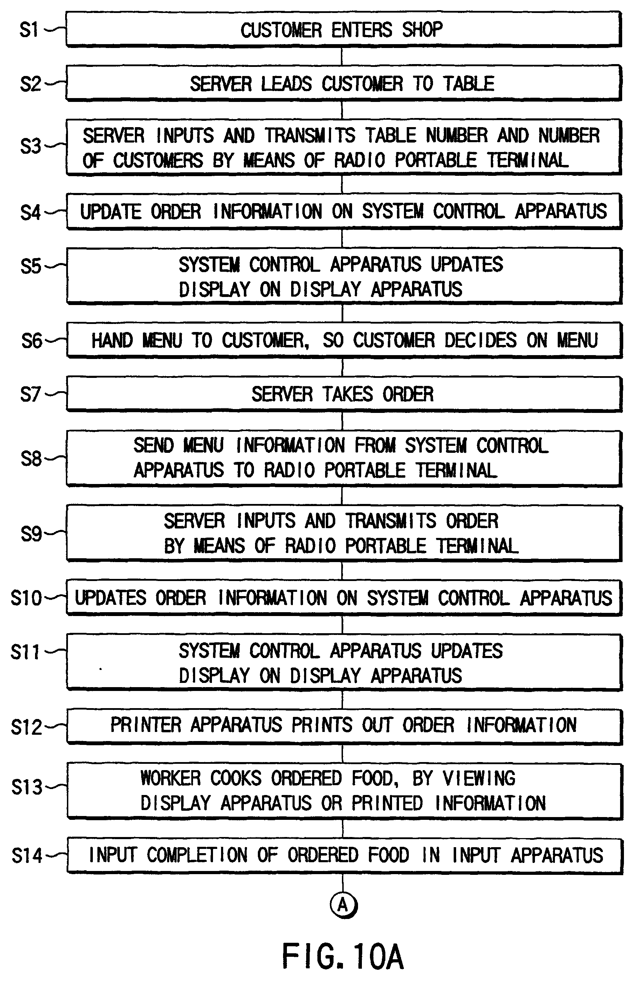

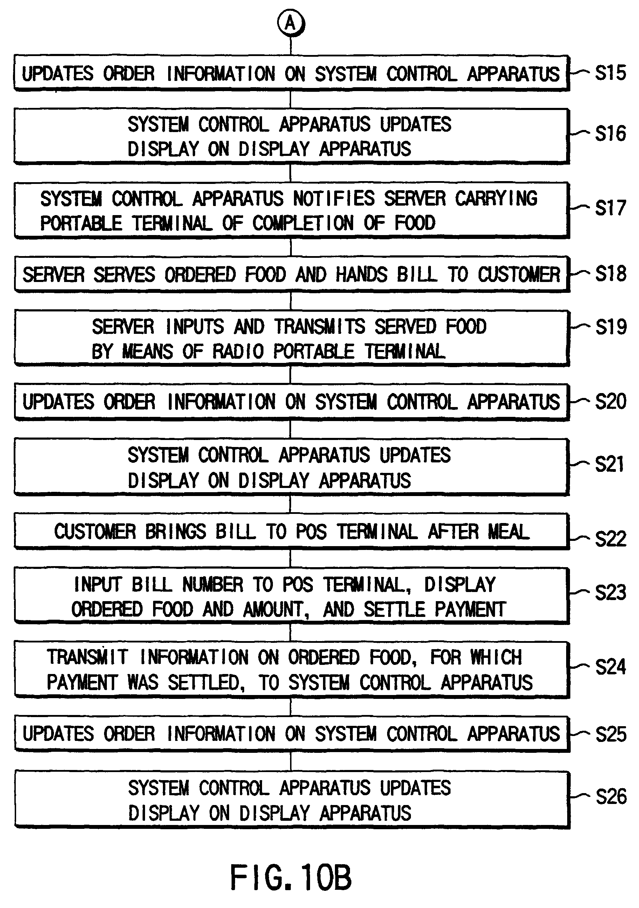

As is illustrated in FIGS. 10A and 10B, if a customer enters the shop in step S1, the server carrying the radio portable terminal 45 leads the customer to the table in S2. The server inputs the table number of the number of customers to the radio portable terminal 45 in S3. The input information is radio-transmitted to the system control apparatus 42 via the radio base station 46 and communication control apparatus 48. The system control apparatus 42 updates order information in S4 and updates the display content of the display/input apparatus 43 in S5. The server shows the menu to the customer in S6, and the customer decides on the menu.

After a while, the server goes to the customer to take an order of the customer in S7 and chooses the order on the radio portable terminal 45. Then, menu information is sent from the system control apparatus 42 to the radio portable terminal 45 in S8. The menu information is stored in the storage section 61m. The server inputs the order of the customer according to the sent menu in S9. The order information is radio-transmitted to the system control apparatus 42 via the radio base station 46 and communication control apparatus 48. The system control apparatus 42 updates the order information in S10, and updates the display content on the display/input apparatus 43 in S11. Further, the order information is printed out by the printer apparatus 44 in S12.

In step S13, the worker in the kitchen begins to cook the ordered food, by viewing the display on the display/input apparatus 43 or the printed information of the printer apparatus 44. If the ordered food is completed, the completion of the ordered food is input to the display/input apparatus 43 in S14. The information of completion of the ordered food is sent to the system control apparatus 42. The system control apparatus 42 updates the order information in S15, updates the display content of the display/input apparatus 43 in S16, and notifies the associated radio portable terminal 45 of the completion of the ordered food in S17.

Having confirmed the completion of the ordered food, the server goes to the kitchen to take the ordered food in S18 and serves the food to the customer. In addition, the server hands a bill printed by the printer apparatus 44 to the customer. When the serving of the food is finished, the server inputs the finish of the serving of food to the radio portable terminal 45. This information is radio-transmitted to the system control apparatus 42. The system control apparatus 42 updates the order information in S20, and updates the display content on the display/input apparatus 43 in S21.

If the customer finishes the meal in S22, he/she goes to the POS terminal 41 with the bill and hands it to the server. The server inputs the bill number to the POS terminal 41 in S23. Thereby, the POS terminal 41 displays the ordered food and the amount and processes the payment settlement of the customer. If the payment is settled, the information of the ordered food, for which the payment is settled, is transmitted from the POS terminal 41 to the system control apparatus 42 in S24. The system control apparatus 42 updates the order information in S25 and updates the display content on the display/input apparatus 43 in S26.

The above is a series of the operations of the order data management system. The updating of the final order information and the updating of display by the system control apparatus 42 is performed by the completion of the payment settlement by the POS terminal 41. Alternatively, after the server has cleared the table, he/she may input the completion of clearing of the table from the radio portable terminal 45, thereby effecting the above steps. Besides, when the customer enters the shop and the server takes an order, the menu information is sent from the system control apparatus 42 to the radio portable terminal 45 upon choosing the order on the radio portable terminal 45. Alternatively, the menu information may be sent from the system control apparatus 42 to the radio portable terminal 45 in advance. The radio portable terminal 45 stores the menu information in the internal memory 61m and uses it. When a change of the menu has occurred, the change information is received from the system control apparatus 42 and the content of the internal memory may be partly changed.

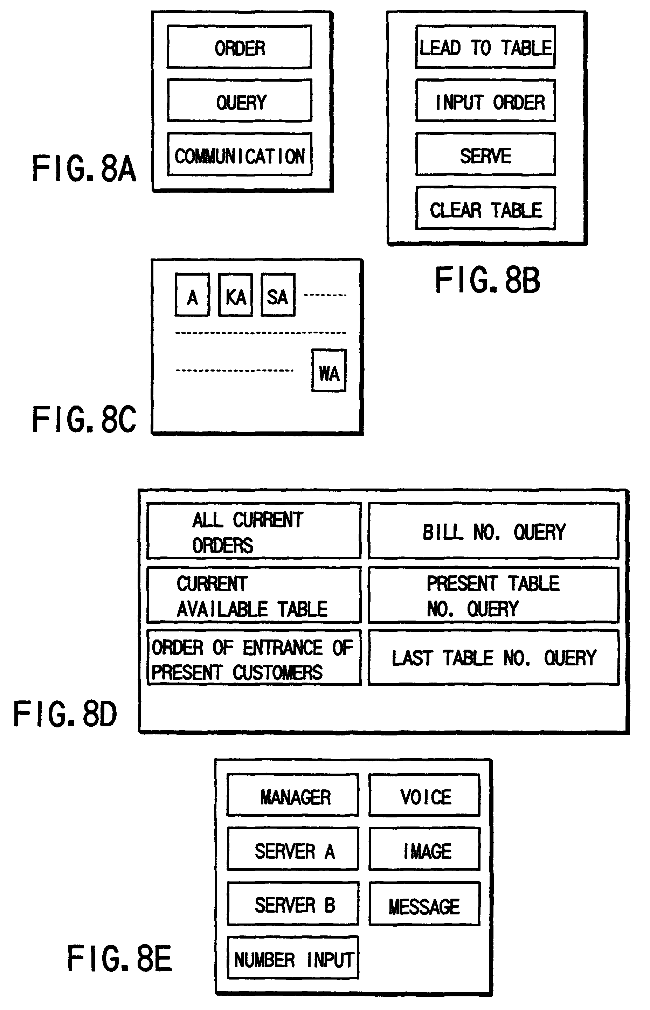

FIGS. 8A to 8E show examples of screen images on the touch-panel display unit 66 of radio portable terminal 45. Three functions, an order function, a query function and a communication function, are displayed on a normal main screen, as shown in FIG. 8A. If "ORDER" is selected on the main screen, the screen switches to an order screen, as shown in FIG. 8B, which shows four menus, "LEAD TO TABLE", "INPUT ORDER", "SERVE" and "CLEAR TABLE."

For example, if "LEAD TO TABLE" is chosen, the screen switches to one for inputting the table number and the number of customers. If the table number and the number of customers are input in this state, information on the table number and the number of customers is automatically radio-transmitted.

If "INPUT ORDER" is chosen, characters "A", "KA", "SA" ... "WA" are displayed, as shown in FIG. 8C. If the characters associated with the menu are chosen in this state, the menu is displayed. If the menu is chosen, "rice or bread?", for example, is displayed. Then, the screen switches in succession to ones for selecting more detailed orders.

If "SERVE" is chosen, the input stand-by state for the table number is created. If the table number is input in this state, the order information of the table is sent from the system control apparatus 42. Thus, this information is received and displayed. If the server chooses the served ordered food in this state, the completion of serving of the ordered food is radio-transmitted to the system control apparatus 42.

Further, if "CLEAR TABLE" is chosen, the input stand-by state for the table number is created. In this state, the table number is input.

On the other hand, if "QUERY" is chosen on the main screen, the screen switches to a query screen, as shown in FIG. 8D, displaying six menus, "ALL CURRENT ORDERS", "CURRENT AVAILABLE TABLE", "ORDER OF ENTRANCE OF PRESENT CUSTOMERS", "BILL NO. QUERY", "PRESENT TABLE NO. QUERY" and "LAST TABLE NO. QUERY."

If "ALL CURRENT ORDERS" is chosen, all information currently displayed on the display/input apparatus 43 is sent from the system control apparatus 42 via the communication control apparatus 48 and radio base station 46. This information is received and displayed.

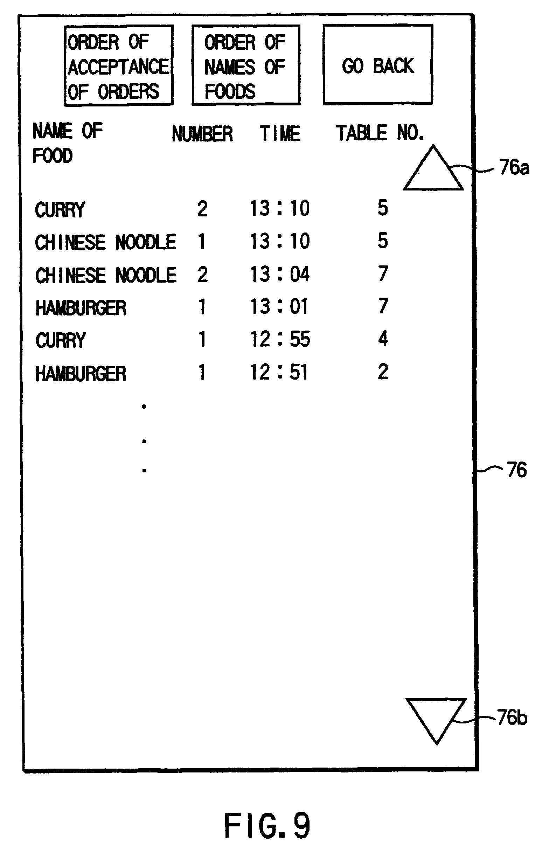

In this case, the names of foods, time of order, table numbers, etc. are displayed in the order of acceptance of orders or individually for respective foods. FIG. 9 shows an example of display image in the case where the order of acceptance of orders is chosen, and it displays the names of foods, time of order, and table numbers. When the number of "ALL CURRENT ORDERS" is large, a "△" key 76a or a "∇" key 76b is depressed to vertically scroll the display image.

If the "ORDER OF NAMES OF FOODS" is chosen, names of foods and number of orders are displayed in a descending order from the food with a maximum number of orders. Accordingly, when the server is asked by the customer how long he/she should wait or which food is well sold or recommendable or notified by the customer that the ordered food has not yet been served, the server can use this function and immediately know the time of wait until the completion of food or the name of food, the number of orders of which is currently large. Thereby, fine services can be provided to the customers.

If "CURRENT AVAILABLE TABLE" is chosen, information on the currently available table is sent from the system control apparatus 42 via the communication control apparatus 48 and radio base station. This information is received and displayed. Accordingly, when the customer has entered the shop, the server can immediately and efficiently specify the current available table, without searching.

If "ORDER OF ENTRANCE OF PRESENT CUSTOMERS" is chosen, the information on the time of entrance of customers, the table number and the number of customers is sent from the system control apparatus 42 via the communication control apparatus 48 and radio base station 46 according to the order of entrance of customers. This information is received and displayed. It is thus possible to estimate which table will become next available on the basis of the time of entrance of customers and the condition of serving of foods.

If "BILL NO. QUERY" is chosen, the input stand-by state for the bill number is created. If the bill number is input in this state, the order information corresponding to the bill number is sent from the system control apparatus 42 via the communication control apparatus 48 and radio base station 46. This information is received and displayed. This display is used, for example, when the customer has inquired after settlement of payment.

If "PRESENT TABLE NO. QUERY" is chosen, the input stand-by state for the table number is created. If the table number is input in this state, the order information of the present table number is sent from the system control apparatus 42. This information is received and displayed.

If "LAST TABLE NO. INQUERY" is chosen, the input stand-by state for the table number is created. If the table number is input in this state, the order information, the time of entrance and the time of exit relating to the customer preceding the present customer of the table number is sent from the system control apparatus 42. This information is received and displayed.

On the other hand, if "COMMUNICATION" is chosen on the main screen, the screen switches to a communication screen, as shown in FIG. 8E, for inputting a communication destination of "MANAGER", "SERVER A" or "SERVER B" along with "NUMBER INPUT", and a communication method of "VOICE", "IMAGE" or "MESSAGE". If the communication destination and the communication method are chosen, the corresponding screen is displayed in turn. For example, if the server B chooses "MANAGER" as the destination and chooses "VOICE" as the communication method, the radio portable terminal 45 performs setting operations to indicate the telephone number of the radio portable terminal possessed by the "MANAGER" and to specify the voice, and sends signals according to RCR-STD28. The radio portable terminal 45 is connected to the radio portable terminal possessed by the "MANAGER" via the radio base station 46. Thus the server B and the manager can communicate in the voice mode. Similar operations are also performed with respect to the connection to other destination and the selection of the communication mode.

The radio portable terminal 45 informs the system control apparatus 42 that the customer sat at the table. A first or a second set time is provided in the time period until the server takes an order from the customer after the customer sat at the table, in the time period until the server serves the ordered food after he/she took the order, or in the time period until payment settlement is finished after the food was served. If the set time is over, the system control apparatus 42 automatically notifies the radio portable terminal 45 and display/input apparatus 43 of the expiration of the set time. Accordingly, even if the server has forgotten to do the routine work, he/she will be notified. Thus, the exact and efficient work of the server is ensured, and, for example, a delay of serving can be properly explained to the customer without causing unpleasant feeling to the customer and fine services can be provided to the customer.

The radio specifications according to RCR-STD28 are the second-generation cordless phones standard using 1.9 GHz band frequencies. Four-channel 32kbps full-duplex links are constituted with one carrier by TDMA-TDD (Time Division Multiple Access Time Division Duplex). Other than the voice communication function, an automatic response mode is chosen on the reception side and retransmission is automatically performed during a call. In addition, information communication other than the communication function is performed according to deemed voice and PIAFS (PHS Internet Access Forum Standard).

FIG. 11 is a view for describing the radio communication system. As described in RCR-STD28, this system is a time division duplex system and a raw transmission speed in one frequency is 384 kbps. This one frequency is divided into eight slots by time division. Four slots are used for up-links, the other four for down-links. One slot comprises 240-bit date, and 160 bits are assigned to user data. Since 160-bit user data can be transmitted in 5 ms in one slot, 32 kbps full-duplex four channels can be constituted in one frequency.

Accordingly, a plurality of radio portable terminals 45 can communicate with the radio base station 46 at the same time by 32 kbps full-duplex communication. Even if the transmission data amount is increased, collision of electric waves, transmission wait, etc. can be reduced. Even if all communication channels are occupied, the user of the radio portable terminal, e.g. the server, may complete the input operation without considering the occupation. One the radio portable terminal 45 detects an available channel, it will automatically radio-transmits the order information to the system control apparatus 42. Thus, the order reception work is completed.

In the radio portable terminal 45, the control unit 61 includes the storage section 61m. Each time the customer order input is begun, latest menu information is received from the system control apparatus 42 by radio-communication and stored in the storage section 61m. After the order input is completed, the menu information in the storage section is deleted. Thus, even if a menu change occurs in some time zone in one day or in some season, or due to some other reason, the latest menu information is obtained each time an order is to be input. Thus, the work for coping with a menu change is efficiently performed.

Since the menu information is deleted after the order reception work is finished, the storage section 61m in the radio portable terminal 45 can be efficiently used. This leads to a reduction in size, power consumption and cost of the radio portable terminal 45. Moreover, since the menu information is received at the time of beginning the order input and then the order input operations are performed for the customer, even if a menu change occurs in the system control apparatus 42 during the order input for the same customer, such a menu change is not effected in the radio portable terminal and no problem will arise. Therefore, the server can operate the radio portable terminal without considering the menu change.

The radio portable terminal 45 radio-communicates with the radio base station 46 with use of full-duplex radio links. Thus, for example, the radio portable terminal 45 can request query data from the system control apparatus 42 via the radio base station 46 before taking an order. Immediately thereafter, the server takes the order and transmits the order data to the system control apparatus 42 via the radio base station 46. At the same time, the server can receive by radio communication the query data in response to the query request.

Accordingly, the query means can be provided, which can execute a query function without hindering an order radio-transmission function. Compared to the prior art, a greater deal of information can be inquired, and the process time for radio-transmission can be reduced. With use of the query means, the server carrying the radio portable terminal can radio-receive desired necessary information on the available table, remaining orders, etc. without limitation, which are conventionally limited for radio-reception. Accordingly, the server's working efficiency is enhanced and the server can provide finer services to the customer. The servers can communicate with one another within the shop with use of radio portable terminals and can thus carry out works quickly without deteriorating the atmosphere within the shop.

Furthermore, when the owner or manager of the shop is out, he/she can communicate, with use of the radio portable terminal, with the radio portable terminal of the server within the shop via the service provider's radio base station 52. Thus, the owner or manager can easily know the sales condition or order condition from outside the shop and can manage the shop from outside.

Since the time division duplex system is adopted, the radio base station 46 has a plurality of full-duplex channels. The radio base station 46 can radio-communicate with a plurality of radio portable terminals at the same time. Accordingly, even if the number of radio portable terminals increases or the radio transmission amount of each terminal increases and, as a result, the rate of use of radio transmission increases, collision of electric waves or signal wait does not frequently occur.

### [Other Example of Use]

In the above embodiment, the order data management system is applied to the use in restaurants. The invention, however, is not limited to this. For example, this invention is applicable to an order data management system wherein order information of a customer or an orderer is input by a radio portable terminal in a retail store or a warehouse, and the order information is sent to a worker in, e.g. a warehouse storing goods or parts, and payment settlement operations are performed by a POS terminal for the client or orderer.

### (Advantage of Invention)

According to the invention of claim 1, the full-duplex radio links are used between the radio portable terminal and radio base station. Thus, the radio portable terminal can quickly receive in a short time a great deal of various query information such as available table information at the same time as radio transmission of order information. In addition, for example, servers within the shop can communicate with one another with use of the radio portable terminal and can thus carry out works quickly without degrading the atmosphere within the shop.

According to the invention of claim 2, the full-duplex radio links employing a time division duplex system are used between the radio portable terminal and radio base station. Thus, the radio portable terminal can quickly receive in a short time a great deal of various query information such as available table information at the same time as radio transmission of order information. In addition, for example, servers within the shop can communicate with one another with use of the radio portable terminal and can thus carry out works quickly without degrading the atmosphere within the shop. Moreover, the radio base station can radio-communicate with a plurality of radio portable terminals at the same time, thereby enhancing communication efficiency.

According to the invention of claim 3, the full-duplex radio links are used between the radio portable terminal and radio base station. Thus, the radio portable terminal can quickly receive in a short time a great deal of various query information such as available table information at the same time as radio transmission of order information. In addition, even if a change of menu information occurs, it can be quickly coped with.

According to the invention of claim 4, the full-duplex radio links employing a time division duplex system are used between the radio portable terminal and radio base station. Thus, the radio portable terminal can quickly receive in a short time a great deal of various query information such as available table information at the same time as radio transmission of order information. In addition, even if a change of menu information occurs, it can be quickly coped with. Furthermore, the radio base station can radio-communicate with a plurality of radio portable terminals at the same time, thereby enhancing communication efficiency.

According to the invention of claim 5, the query means can display "ALL CURRENT ORDERS" on the display unit of the radio portable terminal.

According to the invention of claim 6, the query means can display "CURRENT AVAILABLE TABLE" on the display unit of the radio portable terminal.

According to the invention of claim 7, the query means can display "ORDER OF ENTRANCE OF PRESENT CUSTOMERS" on the display unit of the radio portable terminal.

According to the invention of claim 8, the query means can display "BILL NO. QUERY" on the display unit of the radio portable terminal.

According to the invention of claim 9, the query means can display "PRESENT TABLE NO. QUERY" on the display unit of the radio portable terminal.

According to the invention of claim 10, the query means can display "LAST TABLE NO. QUERY" on the display unit of the radio portable terminal.

## Claims

1. An order data management system comprising:
a POS terminal for storing sales information in a storage section and managing the sales information;
a system control apparatus, provided within the POS terminal or as a separate body, for storing information such as sales information or menu information;
order information notification means for notifying a worker of order information;
one or more radio portable terminals for inputting the order information and radio-transmitting the order information;
one or more radio base stations for radio-communicating with the radio portable terminal with use of full-duplex radio links; and
a communication control apparatus connected to the POS terminal, the system control apparatus and the radio base station,
wherein said radio portable terminal is provided with query means for radio-transmitting various information such as the sales information and menu information stored in the POS terminal or the system control apparatus and displaying the various information on a display unit of the radio portable terminal, and communication means for communication of voice, characters or images with another said radio portable terminal, said POS terminal or said system control apparatus.

2. An order data management system comprising:
a POS terminal for storing sales information in a storage section and managing the sales information;
a system control apparatus, provided within the POS terminal or as a separate body, for storing information such as sales information or menu information;
order information notification means for notifying a worker of order information;
one or more radio portable terminals for inputting the order information and radio-transmitting the order information;
one or more radio base stations for radio-communicating with the radio portable terminal with use of full-duplex radio links employing a time division duplex system; and
a communication control apparatus connected to the POS terminal, the system control apparatus and the radio base station,
wherein said radio portable terminal is provided with query means for radio-transmitting various information such as the sales information and menu information stored in the POS terminal or the system control apparatus and displaying the various information on a display unit of the radio portable terminal, and communication means for communication of voice, characters or images with another said radio portable terminal, said POS terminal or said system control apparatus.

3. An order data management system comprising:
a POS terminal for storing sales information in a storage section and managing the sales information;
a system control apparatus, provided within the POS terminal or as a separate body, for storing information such as sales information or menu information;
order information notification means for notifying a worker of order information;
one or more radio portable terminals for inputting the order information and radio-transmitting the order information;
one or more radio base stations for radio-communicating with the radio portable terminal with use of full-duplex radio links; and
a communication control apparatus connected to the POS terminal, the system control apparatus and the radio base station,
wherein said radio portable terminal is provided with query means for radio-transmitting various information such as the sales information and menu information stored in the POS terminal or the system control apparatus and a memory, and order information input means for receiving menu data from the system control apparatus via the radio base station at the time of inputting order information, storing the menu data in the memory, and inputting the order information on the basis of the menu data stored in the memory.

4. An order data management system comprising:
a POS terminal for storing sales information in a storage section and managing the sales information;
a system control apparatus, provided within the POS terminal or as a separate body, for storing information such as sales information or menu information;
order information notification means for notifying a worker of order information;
one or more radio portable terminals for inputting the order information and radio-transmitting the order information;
one or more radio base stations for radio-communicating with the radio portable terminal with use of full-duplex radio links employing a time division duplex system; and
a communication control apparatus connected to the POS terminal, the system control apparatus and the radio base station,
wherein said radio portable terminal is provided with query means for radio-transmitting various information such as the sales information and menu information stored in the POS terminal or the system control apparatus and a memory, and order information input means for receiving menu data from the system control apparatus via the radio base station at the time of inputting order information, storing the menu data in the memory, and inputting the order information on the basis of the menu data stored in the memory.

5. The order data management system according to any one of claims 1 to 4, wherein in the query means, when "ALL CURRENT ORDERS" is chosen, all information currently displayed on a display/input apparatus is transmitted from the system control apparatus via the communication control apparatus and the radio base station and displayed on the display unit of the radio portable terminal.

6. The order data management system according to any one of claims 1 to 4, wherein in the query means, when "CURRENT AVAILABLE TABLE" is chosen, information on a currently available table is transmitted from the system control apparatus via the communication control apparatus and the radio base station and displayed on the display unit of the radio portable terminal.

7. The order data management system according to any one of claims 1 to 4, wherein in the query means, when "ORDER OF ENTRANCE OF PRESENT CUSTOMERS" is chosen, information on the time of entrance of customers, the table number and the number of customers is sent from the system control apparatus via the communication control apparatus and the radio base station according to the order of entrance of customers, and displayed on the display unit of the radio portable terminal.

8. The order data management system according to any one of claims 1 to 4, wherein in the query means, when "BILL NO. QUERY" is chosen, order information corresponding to an input bill number is transmitted from the system control apparatus via the communication control apparatus and the radio base station and displayed on the display unit of the radio portable terminal.

9. The order data management system according to any one of claims 1 to 4, wherein in the query means, when "PRESENT TABLE NO. QUERY" is chosen, order information of an input present table number is transmitted from the system control apparatus via the communication control apparatus and the radio base station and displayed on the display unit of the radio portable terminal.

10. The order data management system according to any one of claims 1 to 4, wherein in the query means, when "LAST TABLE NO. QUERY" is chosen, order information relating a customer preceding a customer of an input table number, the time of entrance and the time of exit is transmitted from the system control apparatus via the communication control apparatus and the radio base station and displayed on the display unit of the radio portable terminal.
